# EUROPEAN PATENT APPLICATION

(11) **EP 3 957 680 A1**
(43) Date of publication of application: **23.02.2022**
(21) Application number: 20191311.8
(22) Date of filing: 17.08.2020
(51) Int. Cl.: C08K 3/013, C08L 67/06, C08K 7/14, C08L 71/12, C08L 79/08

(54) **COMPOSITIONS AND ARTICLES OF WAVE TRANSMISSION AND IMPROVED DIMENSIONAL STABILITY, RADAR COVER MATERIAL**

(71) Applicant: SHPP Global Technologies B.V., 4612 PX Bergen op Zoom (NL)
(72) Inventor: CHENG, Yunan, Pudong, Shanghai (CN); JIANG, Xiaoming, Pudong, Shanghai (CN); ZHENG, Yun, Pudong, Shanghai (CN); WANG, Jian, Pudong, Shanghai (CN)
(74) Representative: Dehns

(57) **Abstract**

Disclosed herein are compositions comprising (a) from about 1 wt% to about 99 wt% of at least one crystalline polyester; (b) from about 1 wt% to about 99 wt% of an amorphous resin; and (c) from about 10 wt% to about 50 wt% of a reinforcing filler; and wherein the combined weight percent value of all components does not exceed 100 wt%, and all weight percent values are based on the total weight of the composite.

## Description

### FIELD OF THE DISCLOSURE

The present disclosure relates to materials exhibiting microwave absorptive properties, and in particular to materials exhibiting microwave absorptive properties for automotive radar sensor applications.

### BACKGROUND OF THE DISCLOSURE

Microwave radiation, from about 1 GHz (300 mm wavelength) to 300 GHz frequency (1 mm wavelength), is the most common source of electromagnetic energy used in the operation of radar sensors for automotive applications. Metals (aluminum, stainless steel, etc), polymer composite materials containing metallic fillers, such as aluminum flakes, stainless steel fibers and silver-coated polyamide fibers, metalized coatings, inherently conductive polymers (polyacetylene, polypyrrole, polythiophene, polyaniline, etc), silicon carbide, ferrites (Fe₂O₃+Ni/Zn/Cd/Co oxide), and carbonil iron are some of the materials that are being used to shield automotive radar sensors from damaging microwave electromagnetic radiation. Radio detection and ranging (RADAR) is the key element of sensing systems in Automobiles. Reinforced PBT solutions are widely used as radar cover material due to good balance in mechanical, flow and chemical resistance.

With the trend of Advanced Driving Assistance System (ADAS), new radio frequencies have been assigned worldwide. As compared to traditional 24GHz frequencies, 77 GHz has emerged given its high resolution, long distance coverage and high-speed adaption.

Aspects of the present disclosure addresses these and other needs.

### SUMMARY

Aspects of the disclosure relate to a composite comprising: (a) from about 1 wt% to about 99 wt% of at least one crystalline polyester, wherein the at least one crystalline polyester comprises a recycled crystalline polyester; (b) from about 1 wt% to about 99 wt% of an amorphous resin; and (c) from about 10 wt% to about 50 wt% of a reinforcing filler;, wherein the combined weight percent value of all components does not exceed 100 wt%, and all weight percent values are based on the total weight of the composite.

The composition exhibits improved warpage, as determined in accordance with ASTM D3359-09, as compared to a comparative composition that does not include the amorphous polymer. The composition may exhibit a dissipation factor (Df) of from about 0.001 to about 2 when determined as a ratio of ε" and ε' at frequencies from 5-90 GHz when measured according to a resonant cavity method.

### BRIEF DESCRIPTION OF THE FIGURES

FIG. 1 presents Table 1 showing the formulations of comparative PBT compositions CE1 through CE4.
FIG. 2 presents Table 2 showing the properties of samples CE1 through CE4.
FIG. 3A is an image of samples CE-3, CE-4, EX-5, and EX-6 on a planar surface to compare warpage among the samples. FIG. 3B is an image of samples CE-3, CE-4, EX-7, and EX-8 on a planar surface to compare warpage among the samples.
FIG. 4 presents Table 3 showing formulations of PBT blends with amorphous resins EX-5 through EX-9.
FIG. 5 presents Table 4 showing the properties of PBT blends with flat glass fiber EX-5 through EX-9.
FIG. 6A is an image of samples CE-2, EX-5, EX-6, and EX-9 on a planar surface to compare warpage among the samples. FIG. 6B is an image of samples CE-2 and EX-9 on a planar surface to compare warpage among the samples.
FIG. 7 presents Table 5 showing formulations of PBT with varying types of glass fiber EX-10 through EX-14.
FIG. 8 presents Table 6 showing the properties of PBT samples with varying types of glass fiber EX-10 through EX-14.
FIG. 9A is an image of samples CE-2, EX-11, and EX-12 on a planar surface to demonstrate warpage among the samples. FIG. 9B is an image of samples EX-12, EX-13, and EX-14 on a planar surface to demonstrate warpage among the samples.
FIG. 10 presents Table 7 showing formulations of PBT/amorphous resin blends and low Dk glass fiber EX-15 through EX-19.
FIG. 11 presents Table 8 showing the properties of PBT/amorphous resin blends and low Dk glass fiber EX-15 through EX-19
FIG. 12A is an image of samples EX-15, EX-16, EX-17, EX-18, and EX-19 on a planar surface to demonstrate warpage among the samples. FIG. 12B is an image of samples EX-12, EX-15, EX-18, and EX-19 on a planar surface to demonstrate warpage among the samples.
FIG. 13A is an image of samples EX-5 and EX-15 on a planar surface to demonstrate warpage among the samples. FIG. 13B is an image of samples EX-9, EX-18, and EX-19 on a planar surface to demonstrate warpage among the samples.
FIG. 14 presents Table 9 showing formulations of PBT samples EX20 (PBT), EX21 (PBT, PEI 10%), and EX22 (PBT, PEI 20%).
FIG. 15 is a graphical representation of the percent transmission as a function of wavelength for EX20 through EX22 at 250 nm to 2500 nm obtained via UV-VIS spectrometry.
FIG. 16 presents Table 10 showing the values for percent transmission for EX20 through EX 22 at 1064 nm obtained via UV-VIS spectrometry.

### DETAILED DESCRIPTION

The present disclosure relates to filled PBT compositions that may be useful as a radar cover for microwave MW shielding purposes. Conventionally, metals are among the most common materials for MW shielding, but they are heavy and expensive, and may require complex processing to be shaped into a final part. Polymers or carbon composites are typically preferred because of their lower density, lower cost, easy of shaping, and ease of manufacture into high volume molded parts. Further, certain fillers may be used in the composite to trap microwave radiation in enclosure walls thereby protecting the electronic sensors inside the cavity. Microwave radiation, from about 1 GHz (300 mm wavelength) to 300 GHz frequency (1 mm wavelength), is the most common source of electromagnetic energy used in the operation of radar sensors for automotive applications. Accordingly, moderate electrical conductivity, and large dielectric and magnetic losses are some of the features required for materials used in microwave shielding. A moderate electrical conductivity and large dielectric and magnetic losses (characterized by a low dissipation factor) are usually required for materials used in microwave shielding. The present disclosure provides a series of polymer-based materials that improve upon filled PBT/GF resin performance as radar covers.

A conventional PBT GF material maintains having a dissipation factor of about 0.015 at 77 GHz impact high frequency wave transmission negatively. Filled PBT having a dissipation Df less than 0.01 at 77 GHz may be desired for radar cover purposes. Known methods to decrease the Df of PBT may include blending in a lower Df resin that is miscible or mixable with PBT, such as, for example, polypropylene PP. However, as both PBT and PP are crystalline polymers, the blends of PBT/PP show severe problem of warpage, making it difficult to be used as a housing material, such as a radar cover.

To meet considerations with the trend of ADAS, a PBT with both low Df and flatness at 77 GHz is critical. The present disclosure meets this need and others. The disclosed compositions low Df PBT blends with minimal warpage, i.e. good planar flatness. The disclosed compositions may combine low Df amorphous resins, PBT and special fillers, that provide useful materials for high quality radar cover. In certain aspects, the composition may comprise recycled materials, namely recycled PBT. The present disclosure provides thermoplastic-based glass-filled materials that are rigid and of high modulus that maintain a certain shape when molded, and are suitable as internal or external components to trap or isolate MW radiation in automotive radar applications.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

### Thermoplastic Resin Composition

Aspects of the disclosure relate to thermoplastic composition comprising at least one crystalline polyester, an amorphous resin, and a reinforcing filler. In certain aspects, the thermoplastic composition may comprise a recycled resin, such as a recycled crystalline polyester.

In various aspects, the present disclosure provides composite materials useful for the manufacture of enclosures that can isolate electronic sensors from damaging microwave electromagnetic energy. These materials have been evaluated for dielectric properties, such as complex permittivity, reflection and insertion loss, attenuation, and shielding effectiveness, among others, at frequencies from about 10 GHZ and 120 GHz. Further disclosed herein are radar sensor components (plates, enclosures, covers, etc) manufactured from these materials, and articles (sensors, cameras, electronic control units (ECUs)) manufactured from these components.

Further disclosed is a component of an automotive radar sensor, such as, for example, a plate, enclosure, or cover, which is molded from a material comprising a polymer and a carbon filler, with the molded part having certain design, average thickness, microwave absorption efficiency, absorption bandwidth, and a certain surface and volume electrical resistivity. Still another aspect of the present disclosure is an article, such as, for example, a radar sensor, camera, ECU, comprising a molded part made from a radar absorbing material, with such molded part having at least two openings to allow the transmission of microwave radiation between a transmitting antenna and a receiving antenna located in the printed circuit board of the sensor. Automotive radar sensors for lane-change assistance, self-parking, blind spot detection and collision avoidance typically operate at 24 GHz of frequency; those for adaptive cruise control operate at 77 GHz frequency. Accordingly, composites of the present disclosure have been observed in the K-band, which includes the 24 GHz frequency, and in the W-band, which includes the 77 GHz frequency.

### Crystalline Polyester

In various aspects, the disclosed composition may comprise at least one crystalline polyester. Crystallinity, or semi-crystallinity, of a polymer may describe a polymer having molecular chains that are organized or more tightly packed. A result, this highly organized molecular structure may provide a more a defined melting point. These polymers are anisotropic in flow, so they exhibit greater shrinkage transverse to flow rather than with the flow, which can sometimes result in some dimensional instability. There can be varying degrees of crystallinity among different materials and as well as variations among of the same material. The degree of crystallinity can affect many characteristics of the polymer. Molecular weight and branching may affect crystallinity.

e at least one crystalline polyester includes polybutylene terephthalate (PBT), polycyclohexylene dimethylene terephthalate (PCT), polyethylene terephthalate (PET), polyethylene terephthalate glycol (PETG), polycyclohexylene dimethylene terephthalate glycol (PCTG), polycyclohexylene dimethylene terephthalate acid (PCTA), copolymers thereof, or a combination thereof. In a particular aspect the at least one crystalline polyester includes polybutylene terephthalate (PBT).

Certain aspects of the composition include from about 1 wt.% to about 99 wt. % of the at least one crystalline polyester. 50 wt. % to about 97 wt. % of a thermoplastic resin, or from about 40 wt. % to about 97 wt. % of a polymer base resin, or from about 55 wt. % to about 97 wt. % of a polymer base resin, or from about 60 wt. % to about 97 wt. % of a polymer base resin, or from about 70 wt. % to about 97 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 97 wt. % of a polymer base resin.

In various aspects of the present disclosure, the thermoplastic resin may comprise a crystalline polyester. For example, the thermoplastic resin may comprise a polyalkylene ester (a polyester), such as a polyalkylene terephthalate polymer.

Polyesters have repeating units of the following formula (A): 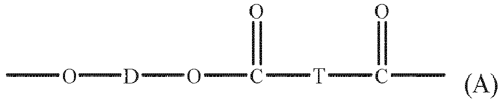 wherein T is a residue derived from a terephthalic acid or chemical equivalent thereof, and D is a residue derived from polymerization of an ethylene glycol, butylene diol, specifically 1,4-butane diol, or chemical equivalent thereof. Chemical equivalents of diacids include dialkyl esters, e.g., dimethyl esters, diaryl esters, anhydrides, salts, acid chlorides, acid bromides, and the like. Chemical equivalents of ethylene diol and butylene diol include esters, such as dialkylesters, diaryl esters, and the like. In addition to units derived from a terephthalic acid or chemical equivalent thereof, and ethylene glycol or a butylene diol, specifically 1,4-butane diol, or chemical equivalent thereof, other T and/or D units can be present in the polyester, provided that the type or amount of such units do not significantly adversely affect the desired properties of the thermoplastic compositions. Poly(alkylene arylates) can have a polyester structure according to formula (A), wherein T comprises groups derived from aromatic dicarboxylates, cycloaliphatic dicarboxylic acids, or derivatives thereof.

Examples of specifically useful T groups include, but are not limited to, 1,2-,1,3-, and 1,4-phenylene; 1,4- and 1,5-naphthylenes; cis- or trans- 1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans- 1,4-(cyclohexylene)dimethylene.

Examples of polyalkylene terephthalate include polyethylene terephthalate (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A useful poly(cycloalkylene diester) is poly(cyclohexanedimethylene terephthalate) (PCT). Combinations including at least one of the foregoing polyesters may also be used.

Copolymers including alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer includes greater than or equal to 50 mol % of poly(ethylene terephthalate), and abbreviated as PCTG where the polymer comprises greater than 50 mol % of poly(1,4-cyclohexanedimethylene terephthalate). Poly(cycloalkylene diester)s can also include poly(alkylene cyclohexanedicarboxylate)s. Of these, a specific example is poly(1,4-cyclohexane- dimethanol-1,4-cyclohexanedicarboxylate) (PCCD), having recurring units of formula (B): 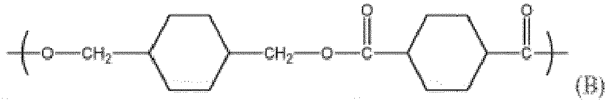 wherein, as described using formula (A), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In another aspect, the composition can further comprise poly(1,4-butylene terephthalate) or "PBT" resin. PBT may be obtained by polymerizing a glycol component of which at least 70 mol %, preferably at least 80 mol %, consists of tetramethylene glycol and an acid or ester component of which at least 70 mol %, preferably at least 80 mol %, consists of terephthalic acid and/or polyester-forming derivatives thereof. Commercial examples of PBT include those available under the trade names VALOX^{™} 315, VALOX^{™} 195 and VALOX^{™} 176, manufactured by SABIC^{™}, having an intrinsic viscosity of 0.1 deciliters per gram (dl/g) to about 2.0 dl/g (or 0.1 dl/g to 2 dl/g) as measured in a 60:40 phenol/tetrachloroethane mixture or similar solvent at 23 degrees Celsius (°C) to 30° C. In one aspect, the PBT resin has an intrinsic viscosity of 0.1 dl/g to 1.4 dl/g (or about 0.1 dl/g to about 1.4 dl/g), specifically 0.4 dl/g to 1.4 dl/g (or about 0.4 dl/g to about 1.4 dl/g).

As described herein, the composition may comprise from about 1 wt. % to about 99 wt. % of a crystalline polyester. In further examples, the composition may comprise from about 50 wt. % to about 97 wt. % of a crystalline polyester, or from about 40 wt. % to about 97 wt. % of a crystalline polyester, or from about 55 wt. % to about 97 wt. % of a crystalline polyester, or from about 60 wt. % to about 97 wt. % of a crystalline polyester, or from about 70 wt. % to about 97 wt. % of a crystalline polyester, or from about 40 wt. % to about 95 wt. % of a crystalline polyester, or from about 55 wt. % to about 95 wt. % of a crystalline polyester, or from about 60 wt. % to about 95 wt. % of a crystalline polyester.

### Amorphous Resin

In an aspect, the thermoplastic composition may comprise a combination of at least one crystalline polyester and an amorphous resin. An amorphous polymer resin may describe a polymer resin have a randomly ordered molecular structure and may lack a discrete melting point. Such amorphous materials may gradually soften as temperature increases. The amorphous resin is often characterized according to its glass transition temperature, T_{g}. While semi-crystalline polymers exhibit organized and tightly packed molecular chains, the polymer chains for amorphous plastics are more disorganized.

The composition may comprise from about 1 wt. % to about 99 wt. % of an amorphous resin. The composition may comprise from about 50 wt. % to about 97 wt. % of an amorphous resin, or from about 40 wt. % to about 97 wt. % of an amorphous resin, or from about 55 wt. % to about 97 wt. % of an amorphous resin, or from about 60 wt. % to about 97 wt. % of an amorphous resin, or from about 70 wt. % to about 97 wt. % of an amorphous resin, or from about 40 wt. % to about 95 wt. % of an amorphous resin, or from about 55 wt. % to about 95 wt. % of an amorphous resin, or from about 60 wt. % to about 95 wt. % of an amorphous resin.

The amorphous resin may comprise a polycarbonate (such as a polycarbonate copolymer DMX), a polyphenylene ether PPE, a polyphenylene oxide PPO, a polyetherimide PEI, or a combination thereof.

In further aspects, the thermoplastic resin may comprise an amorphous resin, such as a polycarbonate polymer. A polycarbonate can include any polycarbonate material or mixture of materials, for example, as recited in U.S. Patent No. 7,786,246, which is hereby incorporated in its entirety for the specific purpose of disclosing various polycarbonate compositions and methods. The term polycarbonate can be further defined as compositions having repeating structural units of the formula (1): 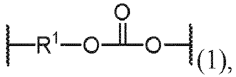 in which at least 60 percent of the total number of R¹ groups are aromatic organic radicals and the balance thereof are aliphatic, alicyclic, or aromatic radicals. In a further aspect, each R¹ is an aromatic organic radical and, more preferably, a radical of the formula (2):

-A¹-Y¹-A²- (2),

wherein each of A¹ and A² is a monocyclic divalent aryl radical and Y¹ is a bridging radical having one or two atoms that separate A¹ from A². In various aspects, one atom separates A¹ from A². For example, radicals of this type include, but are not limited to, radicals such as -O-, -S-, -S(O)-, -S(O₂)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ is preferably a hydrocarbon group or a saturated hydrocarbon group such as methylene, cyclohexylidene, or isopropylidene.

In various further aspects, "polycarbonates" and "polycarbonate resins" as used herein further include homopolycarbonates, copolymers including different R¹ moieties in the carbonate (referred to herein as "copolycarbonates"), copolymers including carbonate units and other types of polymer units, such as ester units, polysiloxane units, and combinations including at least one of homopolycarbonates and copolycarbonates. As used herein, "combination" is inclusive of blends, mixtures, alloys, reaction products, and the like.

In specific examples, the amorphous resin may comprise a polycarbonate copolymer DMX. DMX describes a dimethyl bis phenol cyclohexane (DMBPC)-co-PBA polycarbonate according to the following formula:

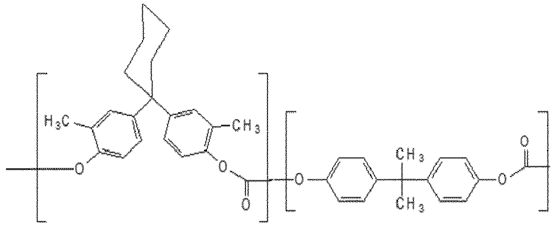

### Polyphenylene ether

The amorphous resin may comprise a polyphenylene oxide (a "poly(p-phenylene oxide)." PPO may describe polymers containing optionally substituted phenyl rings linked with oxygen (O) and can be used interchangeably with poly(p-phenylene ether) or poly (2,6 dimethyl-p-phenylene oxide). Poly(p-phenylene oxide) may be included by itself or may be blended with other polymers, including but not limited to polystyrene, high impact styrene-butadiene copolymer and/or polyamide

The amorphous resin may comprise a polyetherimide. Polyetherimides ("PEIs") are amorphous, transparent, high performance polymers having a glass transition temperature ("Tg") of greater than 180 °C. In an aspect, polyetherimides can comprise polyetherimides homopolymers (e.g., polyetherimidesulfones) and polyetherimides copolymers. The polyetherimide can be selected from (i) polyetherimide homopolymers, e.g., polyetherimides, (ii) polyetherimide co-polymers, and (iii) combinations thereof. Polyetherimides are known polymers and are sold by SABIC under the ULTEM^{™}, EXTEM^{™}, and SILTEM^{™} brands.

In an aspect, the polyetherimides can be of formula (1): 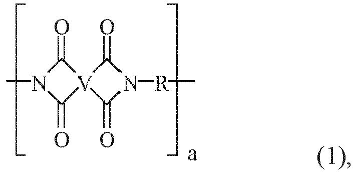 wherein a is more than 1, for example 10 to 1,000 or more, or more specifically 10 to 500.

The group V in formula (1) is a tetravalent linker containing an ether group (a "polyetherimide" as used herein) or a combination of an ether groups and arylenesulfone groups (a "polyetherimidesulfone"). Such linkers include but are not limited to: (a) substituted or unsubstituted, saturated, unsaturated or aromatic monocyclic and polycyclic groups having 5 to 50 carbon atoms, optionally substituted with ether groups, arylenesulfone groups, or a combination of ether groups and arylenesulfone groups; and (b) substituted or unsubstituted, linear or branched, saturated or unsaturated alkyl groups having 1 to 30 carbon atoms and optionally substituted with ether groups or a combination of ether groups, arylenesulfone groups, and arylenesulfone groups; or combinations comprising at least one of the foregoing. Suitable additional substitutions include, but are not limited to, ethers, amides, esters, and combinations comprising at least one of the foregoing.

The R group in formula (1) includes but is not limited to substituted or unsubstituted divalent organic groups such as: (a) aromatic hydrocarbon groups having 6 to 20 carbon atoms and halogenated derivatives thereof; (b) straight or branched chain alkylene groups having 2 to 20 carbon atoms; (c) cycloalkylene groups having 3 to 20 carbon atoms, or (d) divalent groups of formula (2): 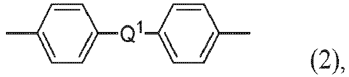 wherein Q1 includes but is not limited to a divalent moiety such as -O-, -S-, -C(O)-, -SO2-, - SO-, -CyH2y- (y being an integer from 1 to 5), and halogenated derivatives thereof, including perfluoroalkylene groups.

In yet further aspects, the thermoplastic composition may comprise a recycled thermoplastic, such as a post-consumer or post-industrial recycled thermoplastic resin ((collectively referred to herein as "PCR"). More specifically, the composition may comprise a recycled polyester resin. As used herein, the term "post-consumer recycled PET," or "recycled PET," or "postindustrial recycled PET" refers to a recycled PET that comprises at least one impurity not present in a corresponding, substantially similar or identical virgin PET. The PET may be reclaimed from post-consumer sources, including but not limited to, home appliances waste for example TV, air-conditioners, washing machines, refrigerators, and like. Irrespective of the source, the recycled PET component can be similar or even identical to those virgin plastic components, known as impact modifier components, that are conventionally used in the manufacture of impact modified thermoplastic blend compositions. However, an important difference between virgin plastic components and recycled plastics utilized in the present compositions, it the presence of at least one impurity that is not present in a virgin material. For example, one or more additives conventionally used in the manufacture of impact modified thermoplastics can be present as an impurity. Additional impurities can include processing residues such as lubricants, mold release agents, antistatic agents, stabilizers, light stabilizers, flame retardants, metals (e.g. iron, aluminum, and copper). Still further, the impurities can include polyurethane particles that cannot be fully removed during the recycling process.

### Reinforcing Filler

In various aspects, the composite comprises a reinforcing filler. Suitable reinforcing filler components may include for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents may be coated with a layer of metallic material to facilitate conductivity, or surface treated, with silanes for example, to improve adhesion and dispersion with the polymer matrix.

In various aspects, the composition can comprise a low dielectric constant fiber filler, specifically, a low dielectric constant glass fiber filler. It is desirable for the low dielectric constant filler to have a low dissipation factor Df. That is, the low dielectric constant filler has a Dk of less than 10 or less than 7 (about 4.5) at a frequency of from 1 GHz to 100 GHz and a Df of less than about 0.005 or less than 0.01 (about 0.0007) at a frequency of from 1 GHz to 100 GHz. Dielectric properties including Dk and Df may be measured according to any appropriate method. According to various aspects, such dielectric properties may be measured according to a resonant cavity method, where a hollow metal box is used to measure the properties at microwave frequencies.

The low dielectric constant glass fibers used in select aspects of this disclosure may be surface-treated with a surface treatment agent containing a coupling agent to improve adhesion to the polymer base resin. Suitable coupling agents can include, but are not limited to, silane-based coupling agents, titanate-based coupling agents or a mixture thereof. Applicable silane-based coupling agents include aminosilane, epoxysilane, amidesilane, azidesilane and acrylsilane. Organo metallic coupling agents, for example, titanium or zirconium-based organo metallic compounds, may also be used. In exemplary aspects, the glass fiber used in the invention may be selected from E-glass, S-glass, AR-glass, T-glass, D-glass R-glass, and combinations thereof. As an example, the glass fiber can be an "E" glass type which is a class of fibrous glass filaments included of lime-alumino-borosilicate glass.

The low dielectric constant glass fiber may have a variety of shapes. The low dielectric constant glass fiber may include milled or chopped glass fibers. The low dielectric constant glass filler may be in the form of whiskers or flakes. In further examples, the low dielectric constant glass fiber may be short glass fiber or long glass fiber. Low dielectric constant Glass fibers having a length of about4 mm (millimeter) or longer are referred as to long fibers, and fibers shorter than this are referred to as short fibers. In one aspect, the diameter of the glass fibers can be about 10 µm.

The low dielectric constant glass fiber may have a round, flat, or irregular cross-section. Thus, use of non-round fiber cross sections is possible. In a still further aspect, the low dielectric constant glass fiber has a circular cross-section. In a yet further aspect, the diameter of the low dielectric constant glass fiber is from about 1 to about 15 µm. More specifically, the diameter of the low dielectric constant glass fiber may be from about 4 to about 10 µm.

In some aspects, the composition can comprise from about 10 wt. % to about 50 wt. % of a reinforcing filler based on the total weight of the polymer composition. The ratio of thermoplastic resin to carbon filler may be from about 32:1 to about 6:1 or from about 24:1 to about 6:1. In further aspects the composition may include from about 4 wt. % to about 8 wt. %, or from about 0.01 wt. % to about 3 wt. %, or from about 0.1 wt. % to about 3 wt. %, or from about 0.01 wt. % to about 2.5 wt. %, or from about 0.5 wt. % to about 3 wt. % of a carbon-based filler, or from about 1 wt. % to about 3 wt. % of a carbon-based filler or from about 0.5 wt. % to about 2.5 wt. % of a carbon based filler.

As noted herein, in certain examples the disclosed composition includes from 10 wt. % to about 50 wt. % of a dielectric glass fiber. In other examples, the composition comprises from 10 wt. % to 50 wt. %, or from about 10 wt. % to about 50 wt. % glass fiber, or 10 wt. % to 40 wt. %, from about 10 wt. % to about 40 wt. % dielectric glass fiber, or from 10 wt. % to 30 wt. %, about 10 wt. % to about 30 wt. % dielectric glass fiber, or even from 10 wt. % to 20 wt. %, or from about 10 wt. % to about 20 wt. % dielectric glass fiber. In yet further examples, the disclosed thermoplastic compositions comprise less than 50 wt. %, less than 40 wt. %, or less than 30 wt. % dielectric glass fiber.

### Impact Modifier

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5° C, -10° C, -15° C, with a Tg of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

### Additives

The disclosed thermoplastic composition can comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

According to certain aspects, the polymer compositions may maintain mechanical performance and dielectric strength even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers. In certain aspects, the composite may comprise a glass fiber filler. In yet further aspects, the composite may be free or substantially free of a glass filler.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides ofbeta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler.

The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB^{™} 5411); 2-hydroxy-4-n-octyloxybenzophenone (CYASORB^{™} 531); 2-[4,6-bis(2,4-dimethylphenyl)-1,3,5-triazin-2-yl]- 5-(octyloxy)-phenol (CYASORB^{™} 1164); 2,2'-(1,4- phenylene)bis(4H-3,1-benzoxazin-4-one) (CYASORB^{™} UV- 3638); 1,3-bis[(2-cyano-3,3-diphenylacryloyl)oxy]-2,2-bis[[(2-cyano-3, 3-diphenylacryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An antidrip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

### Properties and Articles

In certain aspects, the disclosed composites may exhibit certain dielectric and warpage properties. A molded article or plaque comprising the composite may exhibit a dissipation factor Df (tan delta, ε"/ε') between 0.01 and 2 at frequencies of about 10 to about 120 GHz, or at frequencies from 1 MHz to 100 GHz, or from about 1-20 GHz, 1-25 GHz, 1-100 GHZ, 50-100 GHz, or 70-90 GHz when measured according to a resonant cavity method. In further aspects, a molded article or plaque comprising the composite may exhibit a dissipation factor Df (tan delta, ε"/ε') between 0.001 and 2 at frequencies of about 5-90 GHz when measured according to a resonant cavity method.

Plaques molded from the disclosed composite may exhibit warpage properties. Warpage can be defined as a dimensional distortion in a molded product after it is ejected from the mold at the end of the injection molding process. With an increasing focus on thin-walled products, control over the dimensional stability becomes increasingly important. For example, a molded sample may exhibit improved warpage, as determined in accordance with ASTM D3359-09, as compared to a comparative composition that does not include the amorphous polymer. In further aspects, warpage may be determined by observing the magnitude (visually or quantitatively) of lift off away from a planar surface at which a molded part comprising the composition is placed.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow, good impact strength, and good dielectric strength. The compositions may be useful for as well as electrically conducting purposes.

In various aspects, the present disclosure provides composite materials useful for the manufacture of enclosures that can isolate electronic sensors from damaging microwave electromagnetic energy. These materials have been evaluated for dielectric properties, such as dissipation factor Df, among others, at frequencies from about 10 GHZ and 120 GHz. Further disclosed herein are radar sensor components (plates, enclosures, covers, etc) manufactured from these materials, and articles (sensors, cameras, electronic control units (ECUs)) manufactured from these components.

In yet further aspects, the disclosed compositions may exhibit improved transmission. For example, the disclosed composition comprising from about 1 wt% to about 99 wt% of at least one crystalline polyester, wherein the at least one crystalline polyester comprises a recycled crystalline polyester, from about 1 wt% to about 99 wt% of an amorphous resin; and from about 10 wt% to about 50 wt% of a reinforcing filler such as glass fiber may exhibit a greater transmission than a reference composition in the absence of the amorphous resin when measured using UV-VIS spectroscopy in transmission mode at a given wavelength or wavelength range. In a specific example, disclosed composition may exhibit a transmission that is 1.5, 2, 5, 10, 20 times greater than a reference composition in the absence of the amorphous resin at a wavelength of 1064 nm, a wavelength commonly employed in laser irradiation procedures.

Further disclosed is a component of an automotive radar sensor, such as, for example, a plate, enclosure, or cover, which is molded from a material comprising a polymer and a carbon filler, with the molded part having certain design, average thickness, microwave absorption efficiency, absorption bandwidth, and a certain surface and volume electrical resistivity. Still another aspect of the present disclosure is an article, such as, for example, a radar sensor, camera, ECU, comprising a molded part made from a radar absorbing material, with such molded part having at least two openings to allow the transmission of microwave radiation between a transmitting antenna and a receiving antenna located in the printed circuit board of the sensor. Automotive radar sensors for lane-change assistance, self-parking, blind spot detection and collision avoidance typically operate at 24 GHz of frequency; those for adaptive cruise control operate at 77 GHz frequency. Accordingly, composites of the present disclosure have been observed in the K-band, which includes the 24 GHz frequency, and in the W-band, which includes the 77 GHz frequency.

The advantageous characteristics of the compositions disclosed herein can make them appropriate for an array of uses.

### Methods of Manufacture

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Methods may further comprise processing the composite to provide a plaque of a desired thickness. Plaques can be extruded, injection molded, compression molded, or injection-compression molded, and may have a thickness between about 0.5 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

Various combinations of elements of this disclosure are encompassed by this disclosure, e.g., combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims, which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation is 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Aspects of the Disclosure

In various aspects, the present disclosure pertains to and includes at least the following aspects.
Aspect 1. A thermoplastic composition comprising: (a) from about 1 wt% to about 99 wt% of at least one crystalline polyester, wherein the at least one crystalline polyester comprises a recycled crystalline polyester; (b) from about 1 wt% to about 99 wt% of an amorphous resin; and (c) from about 10 wt% to about 50 wt% of a reinforcing filler; and wherein the composition exhibits a dissipation factor (Df) of from about 0.001 to about 2 when determined as a ratio of ε" and ε' at frequencies from 5-90 GHz when measured according to a resonant cavity method,
Aspect 2. The thermoplastic composition according to aspect 1, wherein the at least one crystalline polyester comprises polybutylene terephthalate (PBT), polycyclohexylene dimethylene terephthalate (PCT), polyethylene terephthalate glycol (PCTG), polycyclohexylene dimethylene terephthalate glycol (PCTG), polycyclohexylene dimethylene terephthalate acid (PCTA), copolymers thereof, or a combination thereof.
Aspect 3. The thermoplastic composition according to aspect 1, wherein the at least one crystalline polyester comprises polybutylene terephthalate (PBT).
Aspect 4. The thermoplastic composition according to aspect 1, wherein the at least one crystalline polyester is a recycled polyester.
Aspect 5. The thermoplastic composition according to any of claims 1 to 4, wherein the amorphous resin comprises a dimethyl bis phenol cyclohexane (DMBPC)-co-PBA polycarbonate, polyphenylene ether, polyphenylene oxide, polyetherimide, or a combination thereof.
Aspect 6. The thermoplastic composition according to any of aspects 1 to 5, wherein the composition further comprises from about 1 wt% to about 10 wt% of at least one impact modifier.
Aspect 7. The thermoplastic composition according to aspect 6, wherein the at least one impact modifier comprises polyethylene-glycidyl methacrylate (PE-GMA), styrene-ethylene/1-butene-styrene (SEBS), or a combination thereof.
Aspect 8. The thermoplastic composition according to any of aspects 1 to 7, wherein the reinforcing filler comprises a glass fiber.
Aspect 9. The thermoplastic composition according to any of aspects 1-8, wherein the reinforcing filler comprises a glass fiber having a Dk less than 10.
Aspect 10. The thermoplastic composition according to any of aspects 1-8, wherein the reinforcing filler comprises a glass fiber having a Dk less than 7.
Aspect 11. The thermoplastic composition according to any of aspects 1 to 10, wherein the composition exhibits improved warpage, as determined in accordance with ASTM D3359-09, as compared to a comparative composition that does not include the amorphous polymer.
Aspect 12. The composition according to any one of aspects 1-11, wherein the composition exhibits a dissipation factor (Df) of from about 0.01 to about 2 when determined as a ratio of ε" and ε' measured in transmission mode at frequencies of 5 - 90 GHz.
Aspect 13. The composite of any one of aspects 1-12, further comprising an additive material selected from the group consisting of: an antioxidant; a colorant; a de-molding agent; a dye; a flow promoter; a flow modifier; a light stabilizer; a lubricant; a mold release agent; a pigment; a colorant, a quenching agent; a thermal stabilizer; an ultraviolet (UV) absorbent; a UV reflectant; a UV stabilizer; an epoxy chain extender; a flame retardant; and combinations thereof.
Aspect 14. The composite of any one of aspects 1-13, wherein the composite is a component of an automotive radar sensor.
Aspect 15. An article comprising the composite of any one of aspects 1-14.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of mixing conditions, e.g., component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

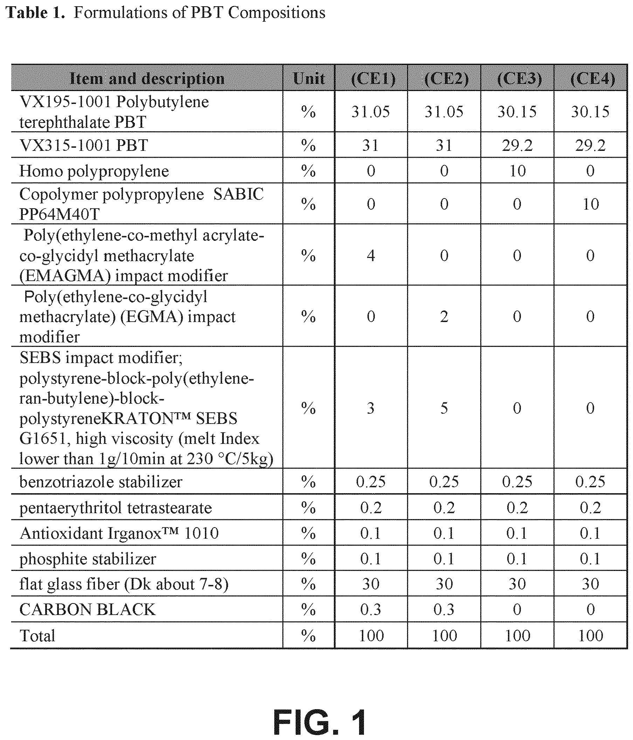

Various PBT composition samples were prepared. Comparative formulations CE1 through CE4 are presented in Table 1 (FIG. 1). The formulations were prepared to demonstrate conventional approaches to lower the Df of PBT compounds. A first approach is the use of impact modifiers with lower Df. For example, by changing impact modifiers from 519385 (CE1) to 519386 (CE2), the Df was decreased significantly from 0.01 to 0.008 at 1.1GHz and from 0.015 to 0.011 at above 75 GHz. A second approach is to combine PBT with another resin having lower Df, for example PP.

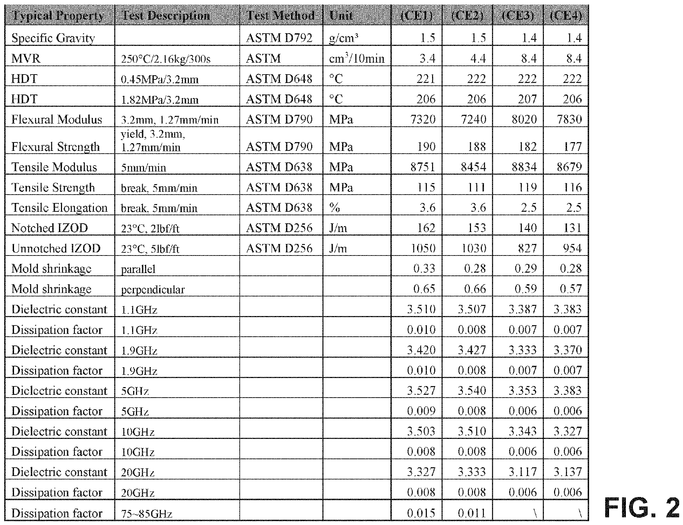

Table 2 (FIG. 2) presents the observed properties, and test standards for obtaining. Dielectric properties were measured by resonant cavity method. For frequencies from 1 to 20 GHz, Agilent resonant split was used. The same methodology is used for frequencies 70 to 90 GHz with alternating radio broadcasting frequency.

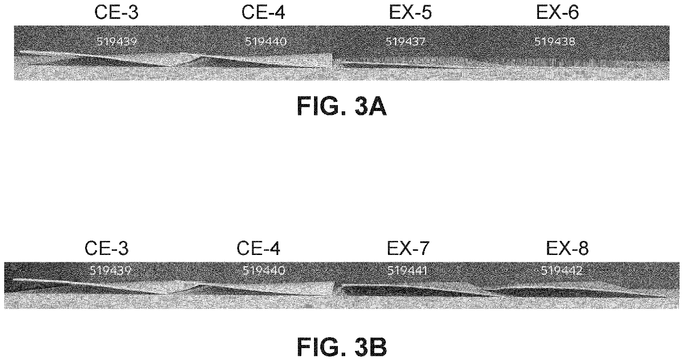

The results of Table 2 demonstrate conventional approaches to lower the Df of PBT compounds. As noted above, by changing impact modifiers from 519385 (CE1) to 519386 (CE2), the Df was decreased significantly from 0.01 to 0.008 at 1.1GHz and from 0.015 to 0.011 at above 75 GHz. By combining PBT with PP resin having lower Df, the resulted blends of PBT/PP (CE-3 - 519439, CE-4 - 519440) show significantly lower Df 0.007 at 1.1GHz. However, these blends of PBT/PP show severe problem of warpage as shown in FIG. 3A and 3B).

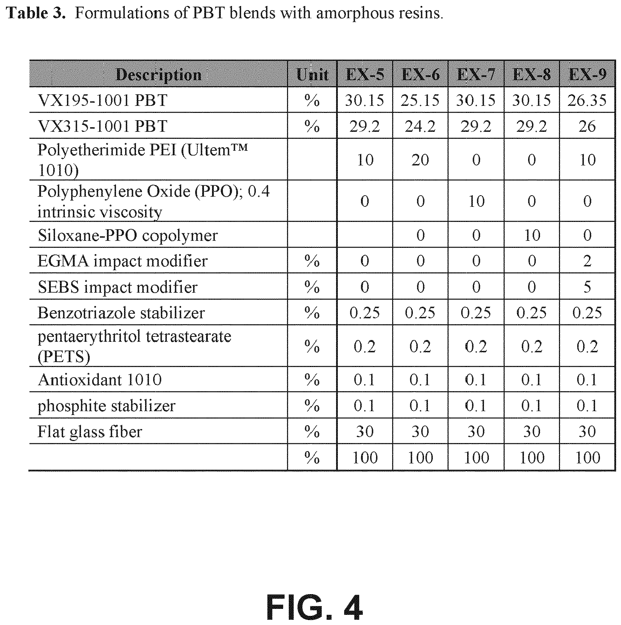

Inventive formulations EX-5 through EX-9 were prepared including blends of PBT with low Df amorphous resins polyetherimide PEI or polyphenylene oxide PPO. Table 3 (FIG. 4) presents the formulations.

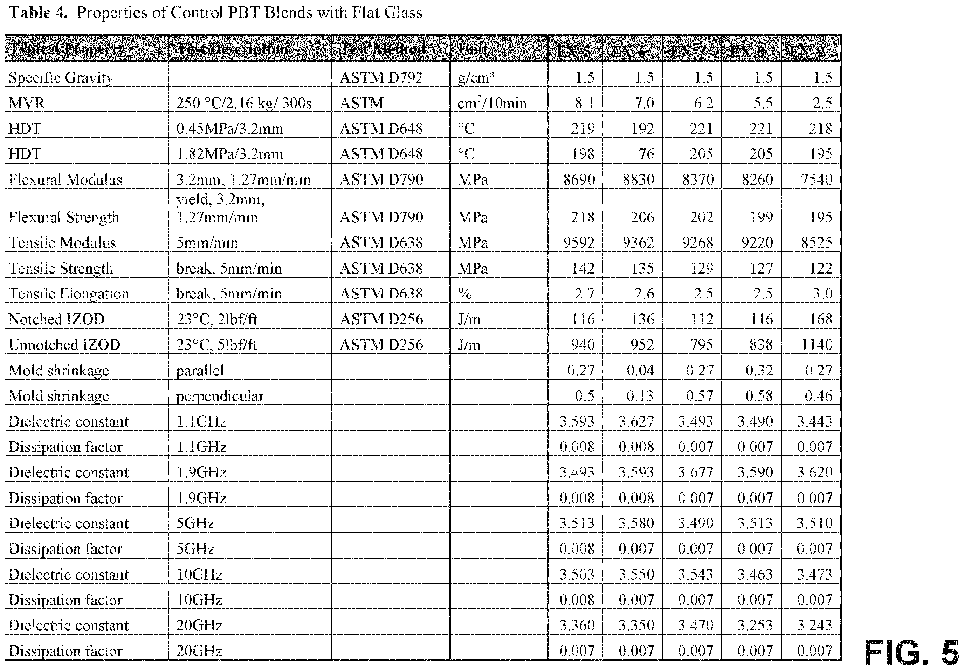

Table 4 (FIG. 5) presents the observed properties, and test standards for obtaining. Dielectric properties were measured by resonant cavity method. For frequencies from 1 to 20 GHz, Agilent resonant split instrumentation was used. The same methodology is used for frequencies 70 to 90 GHz with alternating radio broadcasting frequency.

The resulted blends PBT/PEI have low Df (specifically 0.007 to 0.008) and also high flow and good mechanical properties. See (EX-5 - 519437, EX-6 - 519438). Additionally, warpage appeared improved. With increasing amount of PEI, the warpage issue of the PBT/PP was significantly improved referring again to FIGS. 3A and 3B where there is minimal space between the molded specimen and the surface for EX-5 and EX-6 .

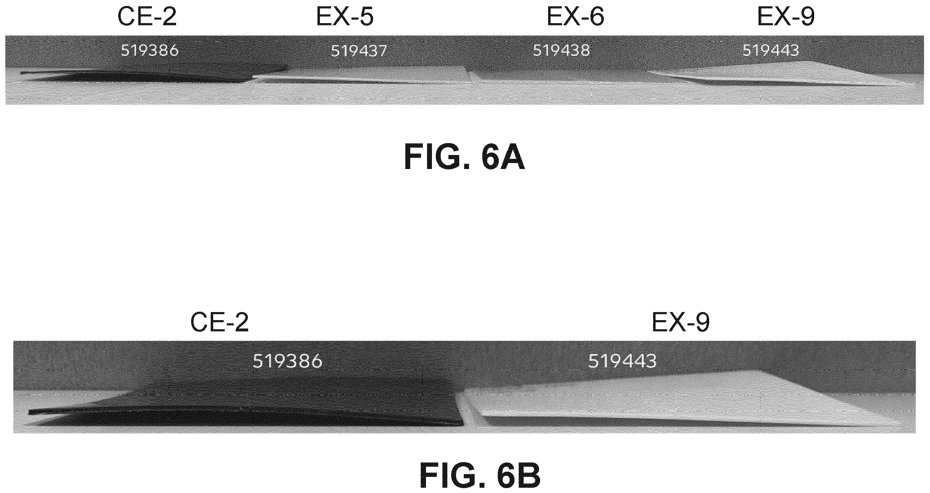

Another example PBT/PPO (EX-7 - 519441, EX-8 - 519442) also show low Df and balanced properties. The warpage is still a problem with a bit improvement as compared to PBT/PP referring again to FIGS. 3A-3B. The samples as contain formulations with similar Df (about 0.007 to 0.008). The blends of PBT/PEI exhibited the best flatness or least warpage, characterized by little to no space between the molded sample and the planar surface. See EX-6 in FIGS. 3A and FIG. 6A In the cases of optimizing the mechanical performance by impact modifiers (CE-2 - 519386, EX-9 - 519443) in FIG. 6B, EX-9 the sample including PEI (519443) has more than 10% lower Df, more than 10% higher impact strength (both notched and unnotched), and better warpage control.

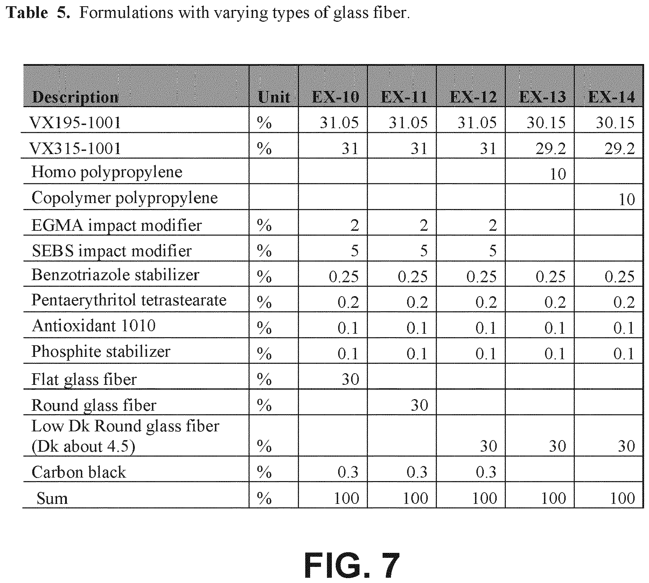

Formulations EX10 through EX14 were prepared with various types of glass fiber as shown in Table 5 (FIG. 7).

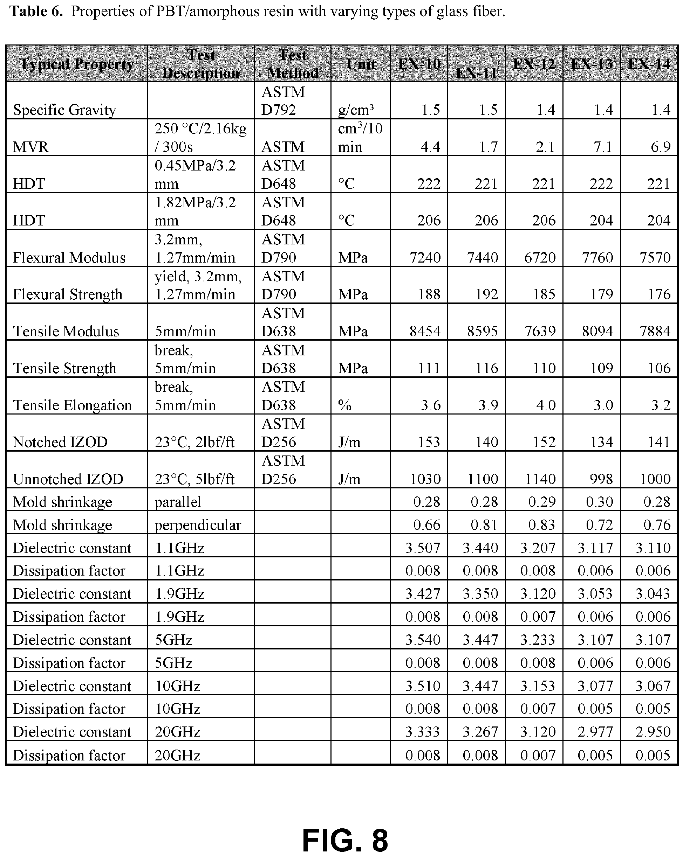

Properties of samples having various types of glass fiber are presented in Table 6 (FIG. 8).

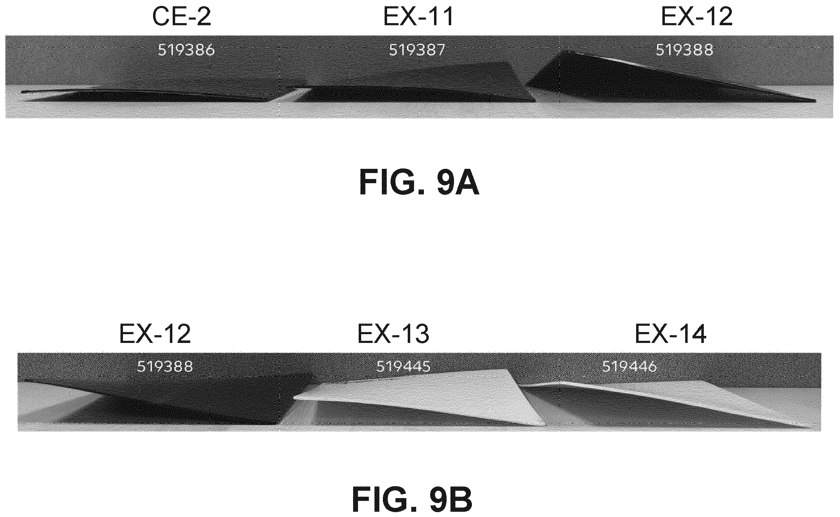

As shown above, by changing the type of glass fiber, the dielectric and warpage performance was altered. By changing the type of glass fiber, the Df exhibited a small shift, but the dielectric constant Dk changed more significantly. As such, using a low Dk glass generated a compound with *both* low Dk and low Df benefits. However, the warpage increased as shown in FIGS. 9A and 9B. Furthermore, by adding PP to PBT, the blends with low Dk glass fiber EX-13 and EX-14 (519445, 519446) exhibited a lower Df but increased warpage.

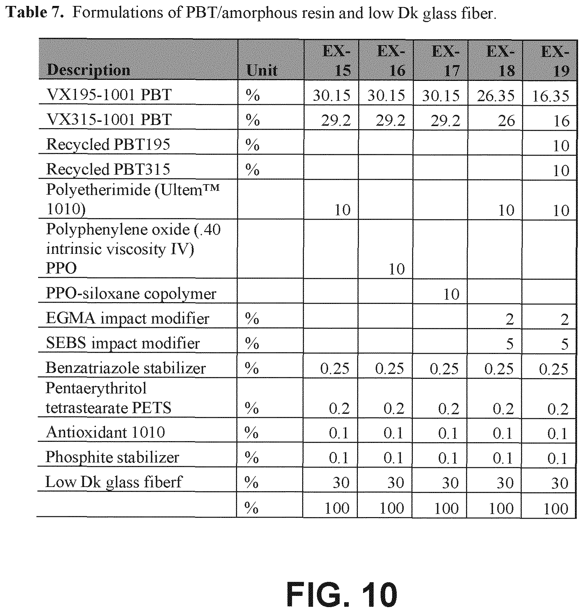

Formulations combining PBT resin and amorphous resin with low Dk glass fiber were also prepared and are presented in Table 7 (FIG. 10).

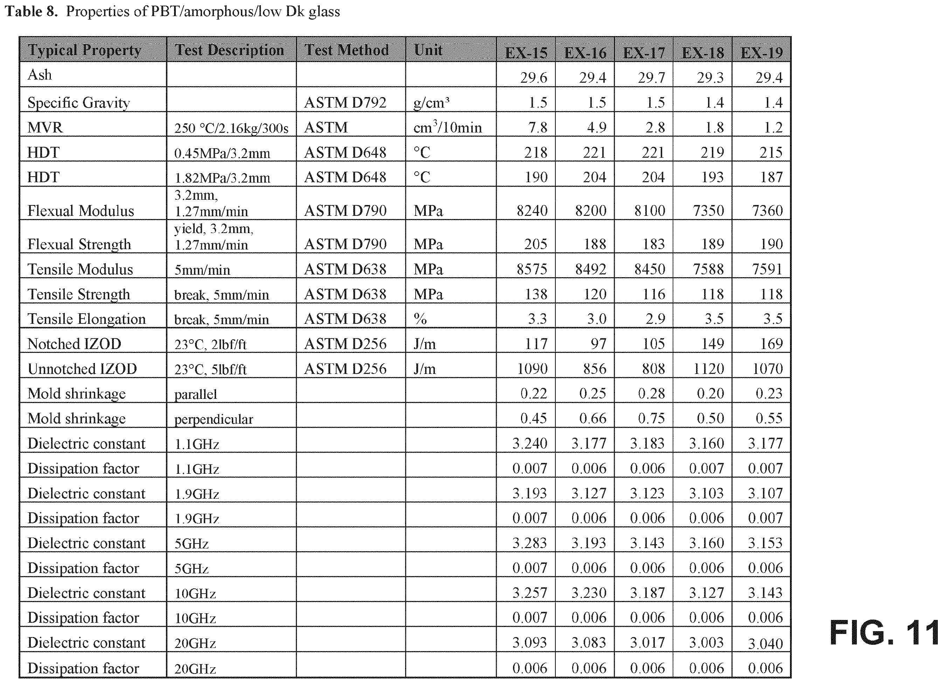

Properties of the PBT/amorphous resin and low Dk glass fiber compositions are presented in Table 8 (FIG. 11).

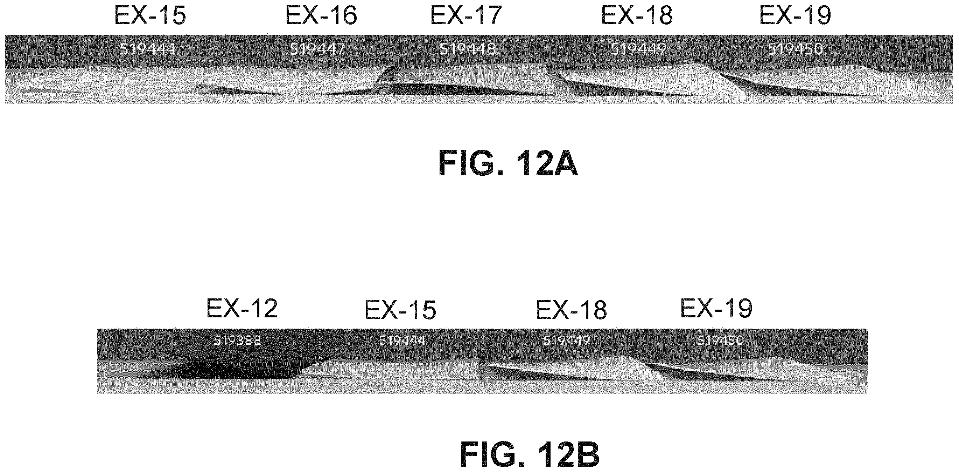

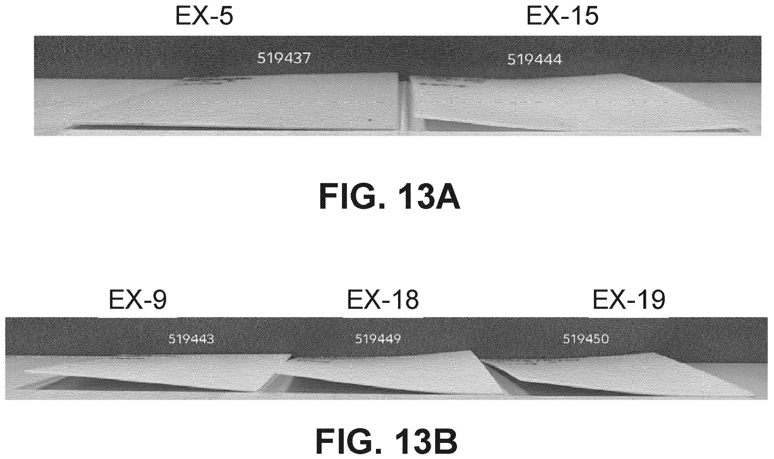

The combination of PBT, amorphous resin, and low Dk glass fiber demonstrate the improved physical properties and reduced warpage as shown in FIGS. 12A, 12B, 13A, and 13B. The samples shown in 12A, 12B, 13A, and 13B exhibit improved warpage as well as a lower Df than the control composition of PBT (EX-12) with low Dk glass fiber and without the low Df amorphous resins.

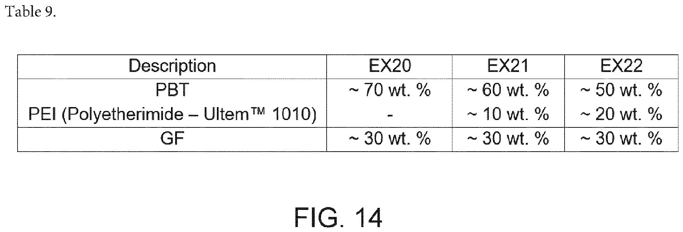

Compositions of the present disclosure may further exhibit properties of light transmission. Compositions comprising 30 wt. % lass fiber were prepared to evaluate transmission properties. The compositions are summarized in Table 9 (FIG. 14).

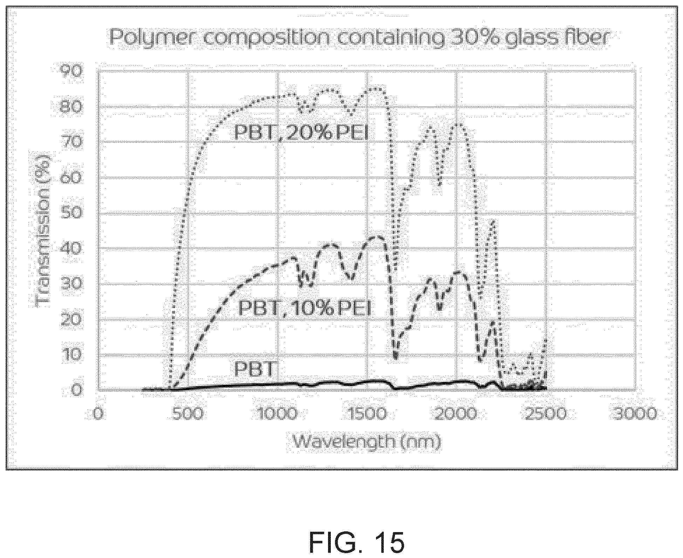

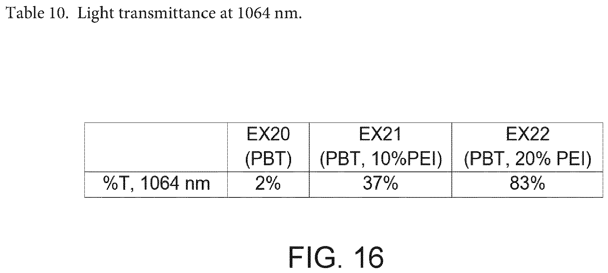

Light transmission was measured by ultraviolet-visible UV-VIS spectrometer using transmission from 250 nm to 2500 nm wavelengths. FIG. 15 shows the transmission of the samples. Table 10 (FIG. 16) shows the transmission values at 1064 nm, which is the wavelength typically used in laser applications (such as laser welding of radar covers). As shown, the PBT-PEI blends (EX21 and EX22) exhibit a nearly 20-fold increase in transmission than the PBT composition (EX20). By doubling the loading of PEI, the transmission also doubled. Accordingly, the disclosed compositions provide improved light transmission properties.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A thermoplastic composition comprising:
(a) from about 1 wt% to about 99 wt% of at least one crystalline polyester, wherein the at least one crystalline polyester comprises a recycled crystalline polyester;
(b) from about 1 wt% to about 99 wt% of an amorphous resin; and
(c) from about 10 wt% to about 50 wt% of a reinforcing filler; and
wherein the combined weight percent value of all components does not exceed 100 wt%, and all weight percent values are based on the total weight of the composite, and
wherein the composition exhibits a dissipation factor (Df) of from about 0.001 to about 2 when determined as a ratio of ε" and ε' at frequencies from 5-90 GHz when measured according to a resonant cavity method.

2. The thermoplastic composition according to claim 1, wherein the at least one crystalline polyester comprises polybutylene terephthalate (PBT), polycyclohexylene dimethylene terephthalate (PCT), polyethylene terephthalate glycol (PCTG), polycyclohexylene dimethylene terephthalate glycol (PCTG), polycyclohexylene dimethylene terephthalate acid (PCTA), copolymers thereof, or a combination thereof.

3. The thermoplastic composition according to claim 1, wherein the at least one crystalline polyester comprises polybutylene terephthalate (PBT).

4. The thermoplastic composition according to claim 1, wherein the at least one crystalline polyester is a recycled polybutylene terephthalate.

5. The thermoplastic composition according to any of claims 1 to 4, wherein the amorphous resin comprises a dimethyl bis phenol cyclohexane (DMBPC)-co-PBA polycarbonate, polyphenylene ether, polyphenylene oxide, polyetherimide, or a combination thereof.

6. The thermoplastic composition according to any of claims 1 to 5, wherein the composition further comprises from about 1 wt% to about 10 wt% of at least one impact modifier.

7. The thermoplastic composition according to claim 6, wherein the at least one impact modifier comprises polyethylene-glycidyl methacrylate (PE-GMA), styrene-ethylene/1-butene-styrene (SEBS), or a combination thereof.

8. The thermoplastic composition according to any of claims 1 to 7, wherein the reinforcing filler comprises a glass fiber.

9. The thermoplastic composition according to any of claims 1 to 8, wherein the reinforcing filler comprises a glass fiber having a dielectric constant (Dk) less than 10 at frequencies from 1 MHz to 100 GHz, or from about 1-20 GHz, 1-25 GHz, 1-100 GHZ, 50-100 GHz, or 70-90 GHz when measured according to a resonant cavity method.

10. The thermoplastic composition according to any of claims 1 to 8, wherein the reinforcing filler comprises a glass fiber having a Dk less than 7 at frequencies from 1 MHz to 100 GHz, or from about 1-20 GHz, 1-25 GHz, 1-100 GHZ, 50-100 GHz, or 70-90 GHz when measured according to a resonant cavity method.

11. The thermoplastic composition according to any of claims 1 to 10, wherein the composition exhibits improved warpage, as determined in accordance with ASTM D3359-09, as compared to a comparative composition that does not include the amorphous polymer.

12. The composition according to any one of claims 1 to 11, wherein the composition exhibits a dissipation factor (Df) of from about 0.01 to about 1 when determined as a ratio of ε" and ε' at frequencies from 1 MHz to 100 GHz, or from about 1-20 GHz, 1-25 GHz, 1-100 GHZ, 50-100 GHz, or 70-90 GHz when measured according to a resonant cavity method.

13. The composite of any one of claims 1 to 12, further comprising an additive material selected from the group consisting of: an antioxidant; a colorant; a de-molding agent; a dye; a flow promoter; a flow modifier; a light stabilizer; a lubricant; a mold release agent; a pigment; a colorant, a quenching agent; a thermal stabilizer; an ultraviolet (UV) absorbant; a UV reflectant; a UV stabilizer; an epoxy chain extender; a flame retardant; and combinations thereof.

14. The composite of any one of claims 1 to 13, wherein the composite is a component of an automotive radar sensor.

15. An article comprising the composite of any one of claims 1 to 14.
